# EUROPÄISCHE PATENTANMELDUNG

(11) **EP 1 484 140 A1**
(43) Veröffentlichungstag der Anmeldung: **08.12.2004**
(21) Anmeldenummer: 03012642.9
(22) Anmeldetag: 04.06.2003
(51) Int. Cl.: B25J 9/00, B25J 15/00

(54) **Vorrichtung zum maschinellen Manipulieren von Objekten**

(71) Anmelder: imt robot AG, 70736 Fellbach (DE)
(72) Erfinder: Nagler, Peter, 70736 Fellbach (DE)
(74) Vertreter: Wasmuth, Rolf, Dipl.-Ing.

(57) **Zusammenfassung**

Die Erfindung betrifft eine Vorrichtung zum maschinellen Bewegen von Objekten wie Fleisch, Fisch, Geflügel oder dgl. auf einer vorgebbaren dreidimensionalen Bewegungsbahn. Im Arbeitsbereich (1) einer Arbeitsfläche (2) für die Objekte (3) ist ein Manipulator (4) mit einem Greifer (6) für die zu bewegenden Objekte (3) vorgesehen, wobei die Arbeitsfläche (2) aus Längselementen (7) mit zwischen benachbarten Längselementen (7) ausgebildeten Längsspalten (17) besteht. Der Greifer (6) weist mindestens einen Greiffinger (13) auf, der in den Längsspalt (17) zwischen benachbarten Längselementen (7) absenkbar und zum Aufnehmen des Objektes (3) unter das Objekt (3) verfahrbar ist. Das Objekt (3) wird im Greifer (6) im wesentlichen durch auf der Bewegungsbahn des Greifers (6) auftretende Beschleunigungskräfte in Kombination mit der Schwerkraft im Greifer (6) gehalten.

## Beschreibung

Die Erfindung betrifft eine Vorrichtung zum maschinellen Manipulieren von Objekten wie Fleisch, Fisch, Geflügel oder dgl. auf einer vorgebbaren Bewegungsbahn nach dem Oberbegriff des Anspruchs 1.

Die Erfindung betrifft eine Vorrichtung zum Manipulieren von Objekten wie Fleisch, Fisch, Geflügel oder dgl. durch Manipulatoren wie Roboter zum Zweck des Umlegens von einer ersten Position z.B. auf einem Band auf eine zweite Position auf einem weiteren Band. So können z.B. Schnitzel von einem Band abgehoben und in eine Verkaufsschale auf einem zweiten Band oder einer festen Ablageposition abgeworfen werden.

Da rohes Fleisch, Fisch und Geflügel Flüssigkeit absondern, bestehen bei an sich bekannten Vakuum-Greifern erhebliche hygienische Bedenken in der Verwendung. Auch hinterlassen Vakuum-Greifer Greifspuren, die den ästhetischen Eindruck beeinflussen können.

Der Erfindung liegt die Aufgabe zugrunde, eine Vorrichtung zum maschinellen Manipulieren von Objekten zu schaffen, mit der hohe Hygieneanforderungen zu erfüllen sind.

Die Aufgabe wird erfindungsgemäß nach den Merkmalen des Anspruchs 1 gelöst.

Durch die Ausbildung der Arbeitsfläche aus Längselementen mit dazwischen ausgebildeten Längsspalten liegen die Objekte wie auf einem Rost oder dgl., so daß der Greifer mit einem Greiffinger in den Längsspalt eintauchen und unter das Objekt fahren kann. Durch Anheben des Greifers wird das Objekt von der Arbeitsfläche abgehoben und auf der weiteren Bewegungsbahn zum Ziel innerhalb des Greifers ausschließlich durch die auftretenden Beschleunigungskräfte in Kombination mit der Schwerkraft im Greifer sicher fixiert. Dies kann unterstützt werden durch die Positionierung des Objektschwerpunktes zwischen Drehachse und Rückwand des Greifers. Dadurch kann der Greifer aus überwiegend greiferstarr angeordneten, unbeweglichen Bauteilen bestehen, so daß der Greifer selbst weder Gelenke, Stellelemente noch Bewegungsspalte aufweist, in die Fleischsaft oder dgl. Flüssigkeiten eintreten könnte. Der Greifer aus ausschließlich unbeweglichen Bauteilen erfüllt auch höchste Hygieneanforderungen und ist einfach und rasch zu reinigen. So kann durch eine einfache Dusche der Greifer auch während langen Betriebszeiten sauber gehalten werden.

Bevorzugt weist der Greifer mehrere etwa parallel nebeneinander liegende Greiffinger auf, die in nebeneinander liegende Längsspalte der Arbeitsfläche eingreifen. Dabei können die Greiffinger gleich lang ausgebildet sein; unterschiedliche Längenausbildungen können vorteilhaft sein. Da der Boden des Greifers durch die Greiffinger nach Art einer Gabel gebildet ist, liegt das Fleischstück ausschließlich auf den Auflageflächen der Gabel auf; Fleischsäfte und andere Flüssigkeiten können abtropfen.

Um auch ein Greifen eng nebeneinander liegender Objekte zu gewährleisten, ist der Greifer um eine zur Arbeitsfläche etwa parallele Verschwenkachse kippbar, so daß ein Objekt nach Art einer Schaufelbewegung in den Greifer aufgenommen werden kann.

Es kann zweckmäßig sein, in der Aufnahme des Greifers einen Niederhalter anzuordnen, der zusätzlich zu den wirkenden Kräften eine Fixierung des Objektes im Greifer unterstützt. Ein derartiger Niederhalter kann zwischen den Greiffingern und dem gegenüberliegenden Schenkel des U-förmigen Greifers angeordnet sein.

Zweckmäßig sind die Seitenflächen des Greifers durch seitliche Stützflansche zumindest teilweise geschlossen, um auch bei großen Seitenbeschleunigungen einen sicheren Halt des Objektes im Greifer zu gewährleisten. Dadurch können auch rasche Drehbewegungen um die Hochachse des Manipulatorarms ausgeführt werden.

Bevorzugt ist die Arbeitsfläche aus einem Riemenband gebildet, welches die Objekte in den Arbeitsbereichen des Manipulators bzw. Roboters fördert.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:
- Fig. 1: eine Draufsicht auf eine erfindungsgemäße Vorrichtung,

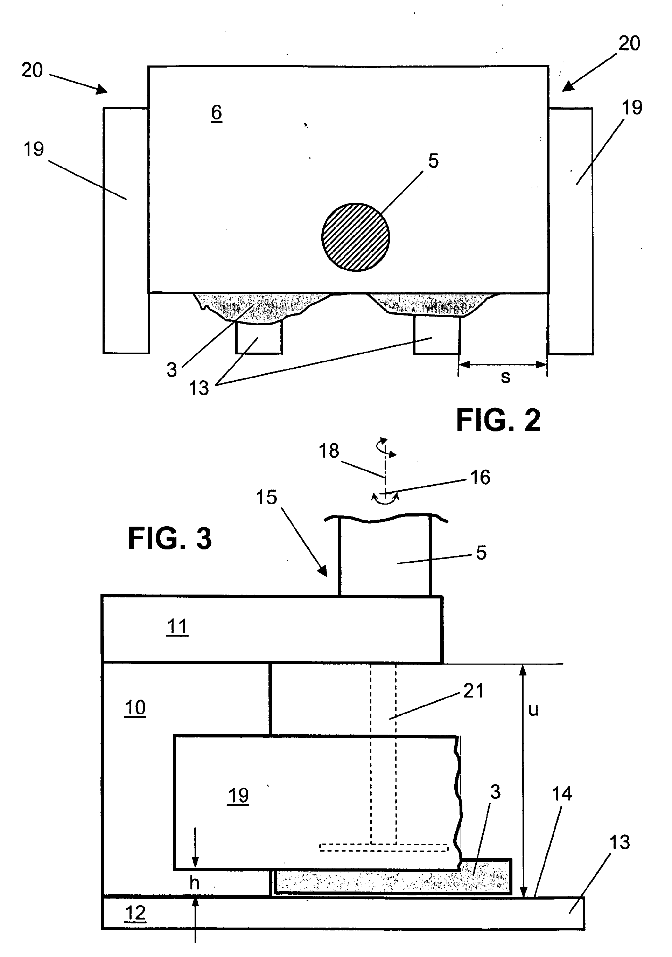

- Fig. 2: in vergrößerter Darstellung eine Draufsicht auf den erfindungsgemäßen Greifer,
- Fig. 3: eine Ansicht des Greifers nach Fig. 2.

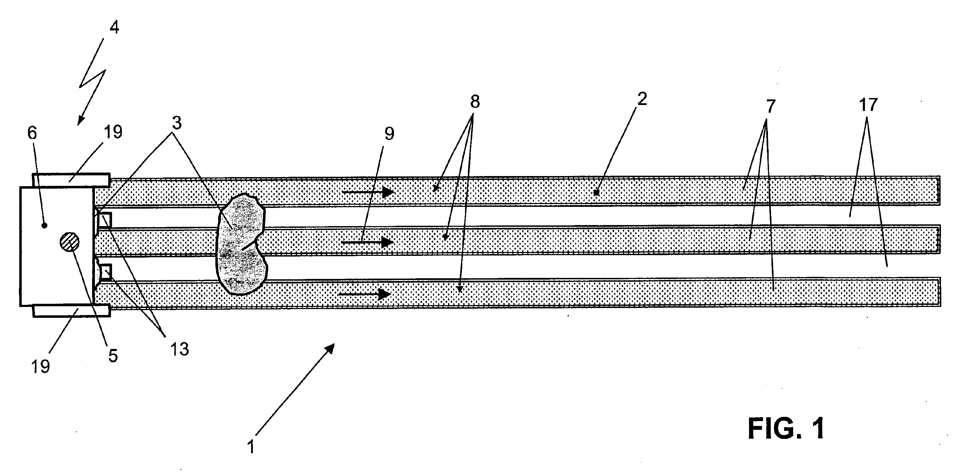

Die in Fig. 1 dargestellte Vorrichtung dient zum maschinellen Manipulieren von Objekten wie z.B. von Fleischstücken (in Form von Fleischscheiben oder dgl.), Fisch (z.B. in Form von Filets), Geflügel (z.B. als Geflügelteile) oder dgl. Nahrungsmittel. Der dargestellte Arbeitsbereich 1 weist eine Arbeitsfläche 2 für die Objekte 3 auf, die im gezeigten Ausführungsbeispiel aus Fleischscheiben (Schnitzel oder dgl.) bestehen. Im Arbeitsbereich 1 ist ein Manipulator 4 angeordnet, von dem lediglich das Ende des Manipulatorarms 5 sowie der am Manipulatorarm 5 befestigte Greifer 6 dargestellt ist. Der Manipulator kann ein Roboter oder dgl. sein, welcher den Greifer schwenken, drehen und längs einer insbesondere dreidimensionalen Bewegungsbahn führen kann. Die Roboterbewegungen werden zweckmäßig derart vorgegeben, daß auf das gegriffene Objekt 3 Beschleunigungskräfte auftreten, die auch ein Mehrfaches der Erdbeschleunigung sein können.

Im gezeigten Ausführungsbeispiel besteht die Arbeitsfläche 2 aus Längselementen 7 mit zwischen benachbarten Längselementen 7 ausgebildeten Längsspalten 17. Die Arbeitsfläche 2 kann so die Gestalt eines Rostes oder dgl. haben; bevorzugt wird die Arbeitsfläche durch ein Riemenband gebildet, wie es im Ausführungsbeispiel Fig. 1 dargestellt ist. Das Riemenband besteht aus einzelnen, die Längselemente 7 bildenden Riemen 8, die in einer Förderrichtung 9 gemeinsam angetrieben sind. Über das aus mehreren Riemen 8 bestehende Riemenband werden die Objekte 3 in den Arbeitsbereich 1 gefördert.

Der im Ausführungsbeispiel gezeigte Greifer 6 hat eine U-förmige Grundgestalt, wobei der Steg 10 des U die Aufnahmeweite u des Greifers 6 bestimmt. Der eine, obere Schenkel 11 des U dient als Befestigungsschenkel zum Manipulator bzw. zum Manipulatorarm 5. Der andere, untere Schenkel 12 bildet einen Greiffinger 13, der in den Längsspalt 17 zwischen benachbarten Längselementen 7 der Arbeitsfläche 2 bzw. zwischen die Riemen 8 des Riemenbandes absenkbar ist. Auf diese Weise wird die Auflagefläche 14 des Greiffingers 13 auf die Höhe der Ebene der Arbeitsfläche 2 gebracht bzw. leicht unter diese Höhe gefahren, wozu im Steg 10 der Breite der Riemen 8 entsprechende Ausnehmungen oder Freistiche vorgesehen sind. Zum Aufnehmen des Objektes 3 fährt der Greifer 6 in Förderrichtung 9 des Riemenbandes nach vorne, wobei die Vorwärtsbewegung des Greifers 6 schneller ist als die Geschwindigkeit des Riemenbandes in Förderrichtung 9. Dadurch fährt der Greiffinger 13 unter das Objekt 3 und kann durch Hochfahren des Greifers 6 von der Arbeitsfläche 2 abgehoben werden. Um eine sichere Aufnahme des Objektes 3 im Greifer 6 zu gewährleisten, sind vorteilhaft mehrere etwa parallel nebeneinander liegende Greiffinger 13 vorgesehen. Im Ausführungsbeispiel nach Fig. 1 sind zwei Greiffinger 13 angeordnet, die den Boden des Greifers 6 bilden. Die Greiffinger 13 sind zweckmäßig gleich lang und greifen in nebeneinander liegende Längsspalte der Arbeitsfläche 2 ein.

Die Greiffinger 13 sind dabei länger als der Befestigungsschenkel 11 ausgebildet, wobei die Auslegung derart getroffen ist, daß der Verbindungsbereich 15 des Befestigungsschenkels 11 mit dem Manipulatorarm 5 etwa oberhalb des Greiferschwerpunktes liegt. Der Greifer 6 selbst ist um eine zur Arbeitsfläche 2 etwa parallele Verschwenkachse 16 kippbar, so daß auch ein Eingreifen in den Längsspalt zwischen zwei eng liegenden Objekten 3 möglich ist. Der Greifer 6 ist darüber hinaus um die Hochachse 18 des Manipulatorarms 5 drehbar.

Der Greifer 6 besteht gemäß einer bevorzugten Ausführungsform der Erfindung aus greiferstarr angeordneten, zueinander unbeweglichen Bauteilen. Dies bedeutet, daß der U-förmige Grundkörper aus einem oder mehreren Greiffingern 13, dem die Öffnungsweite bestimmenden Steg c als auch der Befestigungsschenkel 11 ein starres Gebilde ohne bewegte Teile ist. Dies hat den Vorteil, daß bei der Handhabung der Fleischobjekte Fleischsaft oder dgl. sich nicht in Bewegungsspalten festsetzen kann. Die starre Gestalt des Greifers ermöglicht höchste Hygienestufen; der Greifer selbst ist einfach und schnell zu reinigen.

Um das Objekt 3 im Greifer 6 zu halten, werden die auf der Bewegungsbahn des Greifers zum Zielpunkt auftretenden Beschleunigungskräfte in Kombination mit der Schwerkraft genutzt. Die Bewegungsbahn des Greifers 6 ist derart vorgegeben, daß auftretende Beschleunigungskräfte in Kombination mit der Schwerkraft eine sichere Fixierung des Objektes in der U-förmigen Aufnahme des Greifers 6 gewährleisten. Um auch Verzögerungen ohne Verlieren des Objektes umsetzen zu können, kann es vorteilhaft sein, den Greifer 6 um die Verschwenkachse 16 leicht zu schwenken, so daß die Auflagefläche 14 der Greiffinger 13 in Bewegungsrichtung leicht angestellt ist. Auftretende Bremskräfte können so durch die Schrägstellung abgefangen werden.

Vorteilhaft erfolgt auch das Ablegen des Objektes 3 durch entsprechende Beschleunigung des Greifers in Richtung der Erdbeschleunigung. Wird die Greiferbeschleunigung geringfügig größer als die Erdbeschleunigung gewählt, wird das Objekt aufgrund seiner Trägheit leicht über der Auflagefläche 14 der Greiffinger 13 schweben, so daß durch zeitnahes Zurückziehen des Greifers von dem Objekt 3 dieses aus dem Greifer 6 freikommt und unter Wirkung der Schwerkraft auf eine Zielfläche abfällt. Dabei kann die Endlage des Objektes 3 gegenüber der Ausgangsdrehorientierung beliebig geändert werden. Auch ist ein Wenden des Objektes 3 mit der erfindungsgemäßen Vorrichtung ausführbar.

Es kann zweckmäßig sein, zur sicheren Fixierung des Objektes 3 in der Aufnahme des Greifers 6 seitliche Stützflansche 19 anzuordnen, durch die die Seitenflächen des Greifers 6 zumindest teilweise geschlossen sind. Der Stützflansch 19 liegt vorzugsweise mit seitlichem Abstand s zu den Greiffingern 13 und/oder mit horizontalem Abstand h zur Auflagefläche 14 der Greiffinger 13. Es kann zweckmäßig sein, die Stützflansche 19 kürzer als die Greiffinger 13 auszubilden. Zweckmäßig ist der Stützflansch 19 länger als der den Befestigungsflansch bildende Schenkel 11 des Greifers 6. Um auch empfindliche Objekte sicher zu handeln, kann es vorteilhaft sein, ergänzend einen Niederhalter 21 vorzusehen, der z.B. vom Befestigungsschenkel 11 aus auf das Objekt 3 verfahren wird, um ein Verlieren aus dem Greifer 6 auch unter ungünstigen Arbeitsbedingungen zu vermeiden.

## Patentansprüche

1. Vorrichtung zum maschinellen Manipulieren von Objekten wie Fleisch, Fisch, Geflügel oder dgl. auf einer vorgebbaren Bewegungsbahn, bestehend aus einer in einem Arbeitsbereich (1) vorgesehenen Arbeitsfläche (2) für die Objekte (3) sowie einem im Arbeitsbereich (1) angeordneten Manipulator (4) mit einem Greifer (6) für die zu bewegenden Objekte (3),
**dadurch gekennzeichnet, daß** die Arbeitsfläche (2) aus Längselementen (7) mit zwischen benachbarten Längselementen (7) ausgebildeten Längsspalten (17) besteht und der Greifer (6) mindestens einen Greiffinger (13) aufweist, der in einen Längsspalt (17) zwischen benachbarten Längselementen (7) der Arbeitsfläche (2) absenkbar und zum Aufnehmen des Objektes (3) unter das Objekt (3) fahrbar ist, und daß das Objekt (3) im wesentlichen durch auf der Bewegungsbahn des Greifers (6) auftretende Beschleunigungskräfte in Kombination mit der Schwerkraft im Greifer (6) gehalten ist.

2. Vorrichtung nach Anspruch 1,
**dadurch gekennzeichnet, daß** der Greifer (6) ausschließlich aus greiferstarr angeordneten, unbeweglichen Bauteilen besteht.

3. Vorrichtung nach Anspruch 1 oder 2,
**dadurch gekennzeichnet, daß** der Greifer (6) mehrere etwa parallel nebeneinander liegende, vorzugsweise gleich lange Greiffinger (13) aufweist, die in nebeneinander liegende Längsspalte (17) der Arbeitsfläche (2) eingreifen.

4. Vorrichtung nach einem der Ansprüche 1 bis 3,
**dadurch gekennzeichnet, daß** der Greifer (6) um eine zur Arbeitsfläche (2) etwa parallele Verschwenkachse (16) kippbar ist.

5. Vorrichtung nach einem der Ansprüche 1 bis 4,
**dadurch gekennzeichnet, daß** der Greifer (6) etwa U-förmige Gestalt hat, wobei der Steg (10) des U die Aufnahmeweite (u) des Greifers (6) bestimmt und der eine Schenkel (12) durch den Greiffinger (13) gebildet ist, während der andere Schenkel (11) als Befestigungsschenkel zum Manipulatorarm (5) dient.

6. Vorrichtung nach Anspruch 5,
**dadurch gekennzeichnet, daß** der Greiffinger (13) länger als der Befestigungsschenkel (11) ist.

7. Vorrichtung nach Anspruch 5 oder 6,
**dadurch gekennzeichnet, daß** der Verbindungsbereich (15) des Befestigungsschenkels (11) am Manipulatorarm (5) etwa oberhalb des Schwerpunktes des Greifers (6) liegt.

8. Vorrichtung nach Anspruch 5 oder 6,
**dadurch gekennzeichnet, daß** zwischen dem Befestigungsschenkel (11) und dem Greiffinger (13) ein vorzugsweise pneumatisch betätigter Niederhalter (21) angeordnet ist.

9. Vorrichtung nach einem der Ansprüche 1 bis 8,
**dadurch gekennzeichnet, daß** die Seitenfläche (20) des Greifers (6) durch einen seitlichen Stützflansch (19) zumindest teilweise geschlossen ist.

10. Vorrichtung nach Anspruch 9,
**dadurch gekennzeichnet, daß** der Stützflansch (19) mit seitlichem und/oder horizontalem Abstand (s, h) zum benachbarten Greiffinger (13) liegt.

11. Vorrichtung nach Anspruch 9 oder 10,
**dadurch gekennzeichnet, daß** der Stützflansch (19) kürzer als der Greiffinger (13) ist.

12. Vorrichtung nach einem der Ansprüche 1 bis 11,
**dadurch gekennzeichnet, daß** das Objekt (3) durch Beschleunigen des Greifers (6) entgegen der Erdbeschleunigung von den Greiffingern (13) gelöst und durch zeitnahes Zurückziehen des Greifers (6) von dem Objekt (3) auf einer vorbestimmten Zielposition abgelegt wird.

13. Vorrichtung nach Anspruch 12,
**dadurch gekennzeichnet, daß** die Beschleunigung geringfügig größer als die Erdbeschleunigung ist.

14. Vorrichtung nach einem der Ansprüche 1 bis 13,
**dadurch gekennzeichnet, daß** die in dem Arbeitsbereich (1) vorgesehene Arbeitsfläche (2) zumindest teilweise aus einem Riemenband besteht.

15. Vorrichtung nach Anspruch 14,
**dadurch gekennzeichnet, daß** die zu manipulierenden Objekte (3) über das Riemenband in den Arbeitsbereich (1) gefördert werden.
